# EUROPEAN PATENT APPLICATION

(11) **EP 1 815 736 A2**
(43) Date of publication of application: **08.08.2007**
(21) Application number: 07075264.7
(22) Date of filing: 08.02.2000
(51) Int. Cl.: A01J 5/017

(54) **A method for treating and/or inspecting a teat of an animal**

(30) Priority: 09.02.1999 NL 1011255
(62) Divisional of application: 04075401.2
(71) Applicant: Maasland N.V., 3147 PA Maassluis (NL)
(72) Inventor: De Groen, Franciscus Johannes Adrianus, 3223 ME Hellevoetsluis (NL); van 't Land, Aart, 4411 RV Rilland (NL)
(74) Representative: Corten, Maurice Jean F.M.

(57) **Abstract**

A method for treating and/or inspecting a teat of an udder in which, after the anticipated teat position relative to a reference point has been determined or calculated, said anticipated teat position is used for activating an automatic or semi-automatic device for treating and/or inspecting the relevant teat wherein said anticipated teat position is determined on the basis of the anticipated milk yield of the relevant animal since the last milking.

## Description

The invention relates to a method for treating and/or inspecting a teat of an udder in which, after the anticipated teat position relative to a reference point has been determined or calculated, said anticipated teat position is used for activating an automatic or semiautomatic device for treating and/or inspecting the relevant teat wherein said anticipated teat position is determined on the basis of the anticipated milk yield of the relevant animal since the last milking. Said anticipated teat position is used in particular for roughly positioning the automatic or semiautomatic device for treating the relevant teat. It will be obvious that, when roughly positioning said devices, one should correct the anticipated teat co-ordinates by a correction factor for the purpose of positioning the device remotely from the relevant teat, because the anticipated teat co-ordinates may be equal to the actual teat co-ordinates.

According to an inventive feature, a schedule is made or input in a memory, while for the relevant teat the actual teat co-ordinates are measured before milking and the milk yield is measured after milking the udder and/or an udder quarter. Due to the fact that the period of time between two milkings of the relevant animal is usually irregular, the schedule contains a large number of actual teat co-ordinates with the corresponding milk yield.

According to an other inventive feature, an algorithm is used for determining the anticipated teat position on the basis of the anticipated milk yield and the corresponding actual teat position.

The current actual teat position may further be used for completing the above-mentioned schedule or for adjusting the algorithm.

According to a further inventive feature, the anticipated milk yield of the relevant animal may be determined on the basis of the actual milk yield.

After that the anticipated teat position has been determined or calculated, according to an inventive feature, the current actual teat position relative to the reference point is measured by means of a sensor, such as e.g. a laser or an ultrasonic sensor, and possibly stored in a memory. By means of the current actual teat position it is possible to bring the automatic or semi-automatic device for treating the relevant teat accurately towards the teat for the purpose of subsequently treating same. In this manner a fine positioning of said device is effected.

According to an inventive feature, the anticipated teat position is used for positioning a teat cup of a milking robot.

According to another inventive feature, the anticipated teat position is used for positioning a cleaning device for cleaning the relevant teat. Said cleaning device may constitute part, of course, of a milking robot.

According to again another inventive feature, the anticipated teat position is used for positioning a foremilking machine for foremilking the relevant teat. Said foremilking machine may also constitute part of a milking robot. It will be obvious that the above-mentioned methods may be applied for all the teats of the relevant animal.

The invention also relates to an implement for automatically milking and/or pre-treating the teats of an animal to be milked, which implement is provided with a milking robot for automatically connecting teat cups to the teats of an animal to be milked and/or with a pre-treatment device for pre-treating the teats of an animal to be milked, said implement being suitable for applying the above-described method.

The invention further relates to a computer provided with a memory, which computer has been made suitable for applying a method as described above.

## Claims

1. A method for treating and/or inspecting a teat of an udder in which, after the anticipated teat position relative to a reference point has been determined or calculated, said anticipated teat position is used for activating an automatic or semi-automatic device for treating and/or inspecting the relevant teat wherein said anticipated teat position is determined on the basis of the anticipated milk yield of the relevant animal since the last milking.

2. A method according to claim 1 **characterized in that** a schedule is made or input in a memory, while for the relevant teat the actual teat co-ordinates are measured before milking and the milk yield is measured after milking the udder and/or an udder quarter.

3. A method according to claim 2 **characterized in that** the current actual teat position is used for completing the schedule or for adjusting the algorithm.

4. A method according to claim 1 **characterized in that** an algorithm is used for determining the anticipated teat position on the basis of the anticipated milk yield and the corresponding actual teat position.

5. A method according to claim 4 **characterized in that** the current actual teat position is used for adjusting the algorithm.

6. A method according to any one of the preceding claims **characterized in that** the anticipated milk yield of the relevant animal may be determined on the basis of the actual milk yield.

7. A method according to any one of the preceding claims **characterized in that** the current actual teat position relative to the reference point is measured by means of a sensor, such as e.g. a laser or an ultrasonic sensor, and possibly stored in a memory.
